# EUROPEAN PATENT APPLICATION

(11) **EP 3 461 345 A1**
(43) Date of publication of application: **03.04.2019**
(21) Application number: 17193898.8
(22) Date of filing: 28.09.2017
(51) Int. Cl.: A23L 3/3571, A23B 4/22, A23B 7/155

(54) **ANTI-BACTERIAL PACKAGING**

(71) Applicant: Fixed Phage Limited, Glasgow G2 5AP (GB)
(72) Inventor: The designation of the inventor has not yet been filed
(74) Representative: Schlich, George

(57) **Abstract**

The present invention relates to products and methods for the prevention and amelioration of bacterial contamination and degradation (spoiling) of biological material, particularly foodstuffs. In particular, the invention provides a product comprising an envelope of material defining a lumen wherein the lumen contains bacteriophage covalently attached to a surface.

## Description

### Field of the Invention

The present invention relates to products and methods for the prevention and amelioration of bacterial contamination and degradation (spoiling) of biological material, particularly foodstuffs.

### Background to the Invention

Food is particularly susceptible to contamination and spoiling by bacteria during storage. The bacterial flora found in the food supply chain are complex, with some strains being highly pathogenic and presenting a substantial risk to human health. Others are harmless but can significantly reduce shelf life via secondary problems such as odour, discolouration and degradation of texture. Methods for packaging fresh fruit and vegetables are summarised in "Guide - Packaging Fresh Fruit and Vegetables" published in 2008 by the Packaging and Transport section of the Danish Technological Institute.

Food packaging materials have traditionally been chosen to avoid undesirable interactions with the contained food. Known packaging materials and methods normally mainly function as a protective barrier against the effects of the external environment. Packaging materials designed to interact with food, with the objectives of maintaining food quality and/or enhancing the safety of the packaged product (so-called "active" packaging materials) have been designed (reviewed in "Bioactive Food Packaging: Strategies, Quality, Safety", (2016) edited by Michael Kontominas, DEStech Publications, Lancaster, Pennsylvania, USA). In particular, packaging materials with antimicrobial characteristics have been reviewed in "Antimicrobial polymeric materials for packaging applications: A review" (Eun-Soo Park (2015) published by Formatex, Badajoz, Spain).

A bacteriophage ('phage') is a virus that infects and replicates within a bacterium. 'Lytic' bacteriophages cause bacterial cells to be broken open (lysed) and destroyed after replication of the virion within the bacterium. When the cell is destroyed, the phage progeny can find new hosts to infect. Bacteriophages are the most numerous form of life on Earth. They can be found in all environments where bacteria grow.

Bacteriophages are detected in ground and surface water, soil, food (e.g., sauerkraut, wine), sewage and sludge.

Bacteriophages are able to disperse in both solid and liquid media. International patent application WO 03/093462 and WO2007072049 disclose that immobilised bacteriophages can be covalently attached to a substrate, making it impossible for them to diffuse freely, but retaining their ability to infect cells, thus subsequently causing bacterial lysis and release of free bacteriophage.

Bacteriophage are not capable of active movement - they are passive and are only transported by external processes. Thus, bacteriophage infection of a first population of bacteria might not be transferred to a spatially separated second population of bacteria. That is, bacteriophage infection is most effectively carried and maintained by the presence of a supply of susceptible bacteria.

It is known to apply free bacteriophage to products, for example by spraying. However, such treatments have not been found to be effective in preventing packaged foodstuffs from spoiling. Most notably, phages must generally be provided in a liquid formulation but the addition of moisture is one of the key factors in promoting bacterial spoilage or contamination of foods.

Hence, there is a need for an alternative means to treat or reduce bacterial contamination of packaged material and/or degradation (spoiling) of packaged biological material.

### Object of the Invention

An object of the present invention is to provide products and methods for the prevention and amelioration of bacterial contamination and degradation (spoiling) of biological material, particularly foodstuffs.

### Summary of the Invention

Accordingly, the invention provides an envelope of material defining a lumen wherein the lumen contains bacteriophage covalently attached to a surface.

The surface may be on any substrate to which a bacteriophage may be covalently attached. Thus, this definition of surface includes substrates that are rigid or flexible, or substantially so. Furthermore this definition includes substrates that are of any specific shape or configuration, e.g. planar, curved or spherical. Thus, this definition of surface also includes the surface of a particle, which may be of spherical or of irregular dimensions.

Products, methods and uses of the invention have the advantage of providing an environment within the lumen of the envelope that is separated from and therefore substantially independent of the environment outside the envelope. In this way, the invention yields a product in which a population of bacteria may be better controlled.

Free bacteriophage are capable of infecting and lysing susceptible bacteria. Accordingly, free bacteriophage are sprayed onto material contaminated with bacteria with the intention of controlling the bacterial population. However, this treatment is not as effective as might be expected given the virulence of free bacteriophage under laboratory conditions. The present inventors have observed that free bacteriophage are sensitive to inactivation due to environmental conditions. Inactivation by drying (dehydration) is a significant factor but other factors (exposure to e.g. UV light, free radicals) are also important. Thus, free bacteriophage sprayed onto food material are subject to relatively rapid inactivation. Thus, while free bacteriophage might be expected to infect target bacteria, the present inventors have made the unexpected discovery that they are often inactivated before they have the chance to infect a target bacterium with the result that treatment with free bacteriophage is rendered less effective or ineffective.

Furthermore, because free, i.e. non-immobilised bacteriophages will be inactivated relatively quickly, the chance of bacteriophage-bacteria interactions occurring is further reduced when the concentration of susceptible bacteria is low. Hence the effectiveness of using free bacteriophage to control the bacterial population is limited.

However, even if conditions are such that the susceptible, target bacteria are not replicating and/or at a low concentration, they will be moving (either actively or through diffusion) and will spread within the lumen. In contrast to free bacteriophages, immobilised bacteriophages are specifically constrained but are substantially more stable than free bacteriophages. These characteristics yield the unexpected advantage of increasing the overall probability of a successful bacteriophage infection of susceptible bacteria and thus better control of the bacterial population.

Accordingly, and without wishing to be bound by theory, the present invention has the further benefit of allowing a population of contaminating bacteria to become spread substantially throughout the lumen of the product of the invention without reaching levels that might cause harm or spoilage of a packaged product and, ideally, before susceptible bacteria contact the immobilised bacteriophage. In this way, the timing of bacteriophage infection is controlled. Thus, after an object has been packaged in the lumen, a critical population distribution or size of susceptible bacteria may be reached in the lumen such that the effect of bacteriophage infection can spread throughout the lumen space without leaving spacially isolated pockets of contaminating bacteria.

In the absence of other evidence, it would be expected that phages immobilised onto surfaces would not be sufficiently free to diffuse and interact with their target before critical concentrations of bacteria are reached. Therefore, measurement and appreciation of this extent of migration of the host bacteria is critical when using bacteriophage that have been immobilised onto food packaging so that the food can be treated at points where it is not in contact with the packaging.

This spread of the bacterial population can be achieved before infection of a susceptible bacteria by an immobilized bacteriophage. Such an infection produces free bacteriophage that then infect and substantially destroy the susceptible population of contaminating bacteria. Affecting the whole population of bacteria is made possible by the counter-intuitive step of allowing the bacteria to become spread throughout the lumen such that the population has a contiguous range to allow broader transmission of the bacteriophage infection. Thus, advantageously, the population of the contaminating and bacteriophage-susceptible bacteria is more effectively controlled by skewing the 'predator-prey' relationship between bacteriophage and susceptible bacteria in the favour of the 'predator' bacteriophage.

Furthermore, the bacteriophage immobilized within the envelope are much less susceptible to degradation than free bacteriophage. Thus, they are better available to re-establish control of a population of contaminating bacteria should the contaminating bacteria recolonise the lumen.

The surface may be the interior of the envelope. Immobilising bacteriophage on the interior surface of the envelope has the advantage that manufacture of material making up the walls of the lumen can include covalent attachment of bacteriophage thereto and this material can be directly formed into an envelope. Thus, covalent attachment of the bacteriophage can be carried out on planar materials that are then formed into envelopes, preferably by means that are standard in the packaging industry, e.g. flow packaging. Thus, the manufacturing process of products of the invention is advantageously compatible with existing technologies. Furthermore, packaging materials suitable for forming into a product of the invention may be prepared in advance and/or in a separate location by covalent attachment of bacteriophage to the material before its transportation to and use in the context of known and standard packaging techniques.

In an embodiment of the invention there is provided a product, comprising a biological material sealed within a container or envelope, wherein bacteriophage are covalently attached to at least a portion of an inner surface of the container or envelope, exposed to the material.

Alternatively, or in addition the surface is within the lumen but separable or separated from the envelope. That is, a separate object or material may be inserted in the lumen of the envelope to which bacteriophage are covalently attached. This has the advantage that envelopes of material can be formed using standard methods and the separate object, material or insert may be placed in the lumen thereof. Accordingly, the specificity of the bacteriophage may be conveniently altered by attaching the desired bacteriophage to the insert. Thus, the bacteriophage specificity of the final product can be instituted and altered without large changes to the packaging system, which might otherwise consist of standard machinery and use known methods and techniques.

Thus, a further advantage over applying free bacteriophages to a packaged object is that packaging utilising products and methods of the present invention does not require any additional steps during the packing process. Furthermore, in contrast with the present invention, significant additional labour and time would be required in order to apply free bacteriophages to an object before packaging,

In an embodiment of the invention there is provided an insert for a biological material sealed in a container or envelope, the insert comprising a body and bacteriophage covalently attached to the body and active against bacteria known to cause spoilage of the biological material during storage within the container or envelope.

The insert may comprise a material selected from the list of plastics material, card and cardboard. The insert may be substantially flat and planar. These materials and configurations yield the advantage of being compatible with known techniques and machinery for treating a stock sheet of the material to immobilize bacteriophage thereon before forming the insert by cutting the material to size and inserting the formed insert into an envelope or container.

The separate material inserted into the lumen may also comprise or consist of a powder of one or more particles as defined above. Thus, the surface of the powder particles provides a substrate for the covalent attachment of bacteriophage thereto. Such a powder may comprise or be made of edible material. This edible material may be selected from one or more of: starch, gelatin, cellulose, pectin, collagen and protein, preferably starch or gelatin. Preferably the edible material is dry or substantially so.

The envelope may be sealed. In the present disclosure sealed may mean substantially air tight. Alternatively, 'sealed' may mean the product of the invention is closed sufficiently to isolate the contents of the lumen so that the advantageous predator-prey relationship of the bacteriophage and susceptible bacteria within the lumen that is described above can be engendered and/or maintained. Thus, the term sealing may also encompass surrounding or enclosing one part of an object within packaging material of the invention in order to establish the advantageous the advantageous predator-prey environment as a micro-environment for one part of the object and thus control over bacteria contaminating a particular part of the object, while leaving another part of the product exposed or in a different micro-environment. Sealing of the envelope may conveniently be carried out by employing heat, pressure or adhesive, or a combination of these, to the material of the envelope.

The envelope is not necessarily evacuated or contains a protective (e.g. oxygen-deprived) atmosphere. It is not essential that the immobilised bacteriophage on the walls of the lumen be brought into contact with the material within the lumen for the bacteriophage to be able to control the number of susceptible bacteria within the lumen. Thus, vacuum sealing of the envelope and/or evacuation of the lumen is not required in order to benefit from the advantages of the invention.

Additionally, free bacteriophage are normally applied to a material by way of spraying them onto the material in a liquid carrier. In contrast, the use of bacteriophages covalently immobilised to a surface, e.g. on the packaging material, on an insert, or on dry powder does not increase the amount of moisture (liquid) present in the envelope. Furthermore, a liquid spray might be susceptible to contamination with bacteria thus presenting an additional risk of bacterial contamination of the treated product.

Notwithstanding the above, the lumen may contain liquid, preferably an aqueous solution or water. This has the advantage of increasing the transmissibility of free bacteriophage within the lumen. Without wishing to be bound by theory, the presence of liquid allows bacteriophage to migrate within the envelope more easily and thus more completely.

The atmosphere in the lumen may be air. This has the advantage of controlling the number of bacteria in the lumen of products of the present invention without the need to employ a modified or protective atmosphere, e.g. nitrogen, carbon dioxide, carbon monoxide or argon. Alternatively, the lumen may contain a protective atmosphere, preferably with a reduced oxygen level.

The bacteriophage may be active against bacteria known to spoil or contaminate material stored in the envelope or container.

The product may be for containing biological material. Biological material is particularly susceptible to bacterial contamination and the present invention offers a means of controlling the number of bacteria contaminating biological material packaged within a product of the invention. Furthermore, products of the invention are suitable for protecting non-biological material for which the number of contaminating bacteria is to be controlled.

In an embodiment of the invention there is provided a product, comprising a biological material sealed within a container or envelope, wherein the biological material is susceptible to spoiling by bacteria during storage; and bacteriophage active against the bacteria are covalently attached to an inner surface of the container or envelope or to a surface of an insert within the container or envelope. The insert within the container or envelope may also comprise or consist of a powder of one or more particles as defined above. Preferably, the powder is a dry edible powder which, most preferably, is applied to the biological material.

The biological material may be plant material.

The product may be for containing food. The product may be for containing salad. The food material may be fruit and/or a vegetable. The vegetable material might comprise or consist of broccoli, cabbage, carrots, sweet corn, cucumbers, lettuce, mushrooms, onions, potatoes, rocket, spinach or tomatoes. The fruit material might comprise apples, bananas, berries, citrus, grapes, melons, peaches, pears, or pineapples. The food material may be meat, preferably chicken, beef, fish, pork or lamb.

The bacterial flora found in raw meats is complex with some bacterial strains being highly pathogenic, whilst others are harmless but can lead to a reduction in shelf life via secondary problems such as odour. Products and methods of the present invention are advantageous in being able to manage these bacterial strains to significantly reduce incidence of food poisoning such as gastroenteritis and/or increase shelf life.

The product may be for containing biological plant material that is not edible. Such non-edible material might include plant material such as one or more flowers (which may be cut flowers), seedlings, shrubs and trees or saplings thereof.

The bacteriophage may be active against bacteria selected from one or more of *Campylobacter, Salmonella, Pseudomonas, Pectobacterium, Xanthomonas, Erwinia, Brenneria, Dickeya, Escherichia coli, Shigella, Vibrio, Listeria, Clostridium, Bacillus, Staphylococcus, Yersinia, Enterobacter,* Lactic acid bacteria and *Citrobacter.* The bacteria are known to cause food poisoning and food spoilage. Products of the present invention have the advantage of better controlling the number of bacteria contaminating food incubated at >4°C, i.e. under non-ideal storage conditions.

Preferably, the bacteriophage are active against *Pseudomonas aeruginosa.* This bacterium is not in itself pathogenic, however this bacterium gives chicken a significant odour and effectively results in spoilage causing a loss of sales. Non-immobilised bacteriophage are less effective in controlling *P. aeruginosa* on food stored at temperatures >4°C. Accordingly, products of the present invention have the advantage of better controlling *P. aeruginosa* contamination.

Preferably, the bacteriophage are also active against other bacteria of the genus *Pseudomonas.* In particular the bacteriophage are active against the fluorescent pseudomonads, such as *Pseudomonas fluorescens, Pseudomonas syringae, Pseudomonas putida* and *Pseudomonas fragi,* which have been determined to be responsible for the spoilage of salads, reducing shelf life and causing significant commercial losses.

Preferably the bacteriophage are also active against lactic acid bacteria.

Preferably, the bacteriophage are active against bacteria of the genus *Citrobacter.* The present inventors have unexpectedly found that bacteria of the genus *Citrobacter* are responsible for spoiling of salad during storage. Previously it had been thought this was exclusively due to bacteria of the genus *Pseudomonas,* and lactic acid bacteria. Thus, the present inventors disclose the unexpected benefit of controlling the number of bacteria of the genus *Citrobacter* in preserving, *inter alia,* salad.

Furthermore, the present invention has the advantage of being able to target particular species of bacteria owing to the specificity of bacteriophage infection and action. For example, bacteria of the genus *Citrobacter* can be targeted specifically.

The invention also provides a method of manufacturing a product comprising an envelope of material defining a lumen wherein the lumen contains bacteriophage covalently attached to a surface, wherein the method comprises covalently attaching bacteriophage to the surface and forming the lumen from the material, enveloping the surface.

The invention further provides a method for packaging biological or non-biological material, wherein the method comprises sealing biological material in the lumen of a product comprising an envelope of material defining a lumen wherein the lumen contains bacteriophage covalently attached to a surface.

In an embodiment of the invention there is provided a method of preparing a biological product, comprising:
providing a biological material
providing a container or envelope for the biological material
covalently attaching bacteriophage to at least a portion of a surface of the container or envelope,
locating the biological material inside the container or envelope and sealing the container or envelope with the bacteriophage on an inner surface of the container or envelope, exposed to the biological material.

The invention also provides for the use of a product comprising an envelope of material defining a lumen wherein the lumen contains bacteriophage covalently attached to a surface to control the number of bacteria on material sealed within the lumen of the product.

Preferably this use is for the preservation of biological material, more preferably the preservation is temporary. The term preservation is used to include meaning extending the edible or usable life of a biological product and/or extending shelf life. This has the advantage that material protected using a product of the invention can be stored, displayed and/or sold for longer than biological material that is not preserved according to the invention.

The invention also provides a system for packaging an object within the lumen of the product of claims the invention comprising: apparatus for covalently immobilising bacteriophage on the surface of the envelope; and apparatus for sealing the object in the lumen of the product.

The invention further provides for the use of bacteriophage active against bacteria of the genus *Citrobacter* in the control or prevention of spoiling of plant material, preferably the plant material is a foodstuff, more preferably the foodstuff is salad.

The invention also provides a product comprising bacteriophage active against bacteria of the genus *Citrobacter* covalently immobilised on a substrate. Suitable substrates are disclosed in applications WO 03/093462 and WO2007072049.

Bacteriophage may be immobilised onto many different types of common food packaging material including those made from or comprising material selected from: polyethylene, polyamides and cellulose film.

The invention further provides a method comprising the step of covalently immobilising bacteriophage active against bacteria of the genus Citrobacter on a substrate.

### Examples and Description of the Drawings

The invention is now illustrated in the following specific embodiments with reference to the accompanying drawings showing:-
- Fig. 1: Results of *Pectobacterium atrosepticum* (Pba) 49075-induced spoilage on spinach leaves after 48 hours of incubation at 30°C. Image A shows a basil leaf treated with both bacteria and phage. Image B shows a basil leaf treated with just Pba 49075. Image C is a control (leaf left untreated).
- Fig. 2: Spinach leaf utilised for Migration Study with Pba 49075 and bacteriophage φ49075.
- Fig. 3: Bar chart showing the extent of migration for both free and immobilised phage.
- Fig. 4: A reconstructed salad bag containing 50 g of spinach leaves.
- Fig. 5: Screening of spinach leaves in the bag sections: Beginning (a), Middle (b) and End (c) following overnight enrichment of sampled bacteriophage. A control showing a Pba 49075 top agar lawn is shown in (d).
- Fig. 6: Phage concentration per g of φ49075 in the different salad bag sections
- Fig. 7: Observational Evaluation of Shelf Life: (1 = very fresh, 5 = very decayed). Line indicates "use by date"; (A) appearance of freshness; (B) evenness of colour on each salad leaf; (C) gloss/even appearance of salad; (D) wilt and lack of rigour in salad leaves; (E) browning on the salad leaves (i) leaf edge browning and (ii) leaf surface browning.
- Fig. 8: Number of *Campylobacter jejuni* isolated from chicken pieces following contamination and storage at three different conditions: a) stored for 72h at 37°C; b) stored for 120h at 4°C; c) stored for 16h at room temperature.
- Fig. 9: Number of *Salmonella typhimurium* isolated from chicken pieces following contamination and storage at three different conditions: a) stored for 72h at 37°C; b) stored for 120h at 4°C; c) stored for 16h at room temperature.
- Fig. 10: Number of *Pseudomonas aeruginosa* isolated from chicken pieces following contamination and storage at three different conditions: a) stored for 72h at 37°C; b) stored for 120h at 4°C; c) stored for 16h at room temperature.
- Fig. 11: Number of *C*. *jejuni and S. typhimurium* isolated from chicken pieces following contamination with a combination of these bacteria and storage at three different conditions: a) stored for 72h at 37°C; b) stored for 120h at 4°C; c) stored for 16h at room temperature.
- Fig. 12: Number of bacteriophages on chicken skin as a function of distance from the point of original inoculation.

### Example 1

### Migration of Bacteriophages φ49075 on Spinach Leaves

Observation of bacteriophage migration on spinach leaf surfaces demonstrated that free and immobilised bacteriophages can disperse themselves.

Bacteriophage φ49075 and its corresponding host, *Pectobacterium atrosepticum* (Pba) 49075, a common plant pathogen, were used as a model to demonstrate phage migration. Both free bacteriophage and immobilised bacteriophage were applied to leaf surfaces treated with Pba 49075. The extent to which the bacteriophages migrated across the leaves was measured.

To apply the bacteria, 1 mL of a 1/10 dilution of Pba 49075 overnight culture was dropped on a specific point on the leaf using a pipette. To apply the bacteriophage, 100 µl of lysate were spotted on the same point the host was added.

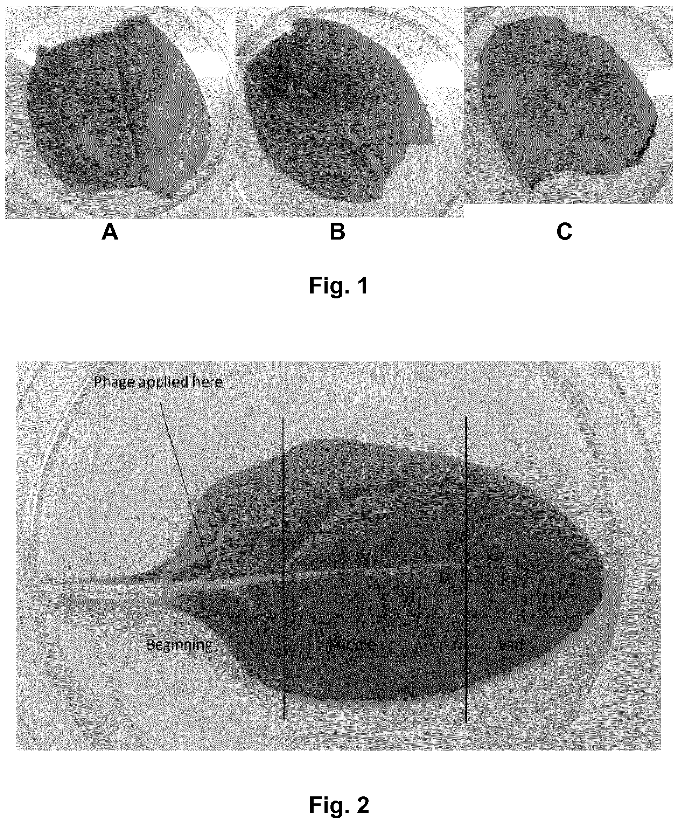

The results of these experiments (shown in Fig. 1) demonstrate that Pba 49075 causes spoilage in basil leaves and that φ49075 is effective at slowing this process.

In addition to the the visual test presented in Figure 1, cell counts were also carried out, where it was found that phage treatment resulted in a reduction in the bacterial count. In these experiments leaves were initially treated with 300 µl of Pba 49075 (overnight culture) which was added to the leaf surface and evenly spread. 10 µl of phage were then spotted on the leaf surface. The leaves were suspended in Petri dishes containing 2 mL of water to protect from desiccation. They were incubated at 30°C overnight. Following this, the leaves were removed, weighed and submerged in 10 mL of PBS for 2 hours. The bacterial content of the PBS solutions was measured and the concentration per unit mass of the leaf section was calculated (results shown in Table 1).

**Table 1: Mean bacterial concentration on leaves following treatment with φ49075.**

| | **Bacteria Only** | **Bacteriophage Treatment** |
|---|---|---|
| Mean Bacterial Concentration (cfu/g) | 7.1 × 10⁹ | 9.7 × 10⁸ |

This bacteriophage-host pair was used as a model to further investigate bacteriophage migration.

### Migration Study

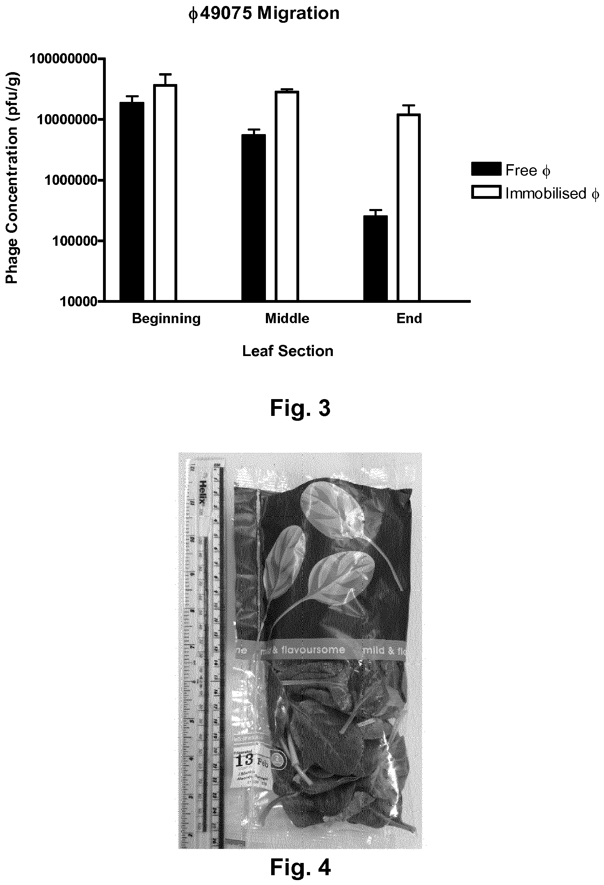

φ49075 was demonstrated to migrate across spinach leaves containing Pba 49075 on their surfaces. The phage was at its highest quantity in the region to which it was applied, with a gradual decline in numbers moving away from this point (see Figures 2 & 3).

The leaves illustrated by Fig. 2 were kept suspended in Petri dishes with a small amount of water present at the base (to protect leaves against desiccation). 300 µl of overnight Pba 49075 were added to the leaf surface and spread evenly. 10 µl of φ49075 lysate were spotted as shown above (in the case of immobilised phage, 1 cm² immobilised plastic sheet was placed on the leaf). Following 24 hours of incubation at 30°C, the leaves were cut into thirds as shown, with the bacteriophage content on each third being determined.

The Bacteriophage content for the leaf sections shown in Fig. 3 was determined by weighing a leaf section before leaving it to soak for 2 hours in 10 mL of PBS. Phage concentration for the PBS solution was measured using plaque assays and the original phage concentration per unit mass for the given leaf section was calculated.

We see from Fig. 3 that in the case of immobilised bacteriophage, the decline in phage numbers across regions is not as sharp as that observed for free phage, where a reduction greater than 1 log was observed from the beginning region to the end region. As a control, leaves left untreated with bacteria were treated with phage in the same way as the test leaves; bacteriophage was only detected in the 'Beginning' section, which was where it was applied.

### Example 2

### Migration Study with Salad Bags

For this study, a migration study was carried out within salad bags to establish whether bacteriophages are also capable of dispersing across longer distances with more obstacles.

Salad bags measuring 24.5 × 10 cm (as illustrated in Fig. 4) were constructed from large Tesco 300 g spinach bags using a heat sealer. 50 g of spinach leaves were placed each bag. 10 mL of Pba 49075 were applied to the bag, which was sealed and inverted gently to distribute the bacteria inside it. An 8 × 4 cm sheet of plastic with immobilised φ49075 was placed at the far end of the bag, which was sealed again. The bag was left to stand for 36 hours at room temperature, after which it was divided up into three equal thirds, labelled 'beginning, middle and end' ('Beginning' referred to the section where the immobilised sheet of plastic was present).

Initial testing was carried out to determine whether any bacteriophage migration occurred. Small cuts were made in the side of the bag for each section ('beginning, middle and end'). A swab was used to sample through the cut. Each swab was added to nutrient broth containing Pba 49075 in the log phase of growth and enriched overnight. The following day, each enriched sample was screened against the host.

To investigate the extent of migration, known quantities of leaves were removed from the bags and tested for phage content. This was done by suspending in 20 mL of PBS for 2 hours and determining the concentration of phage extracted from the leaves through plaque assays. Each bag section was sampled in triplicate.

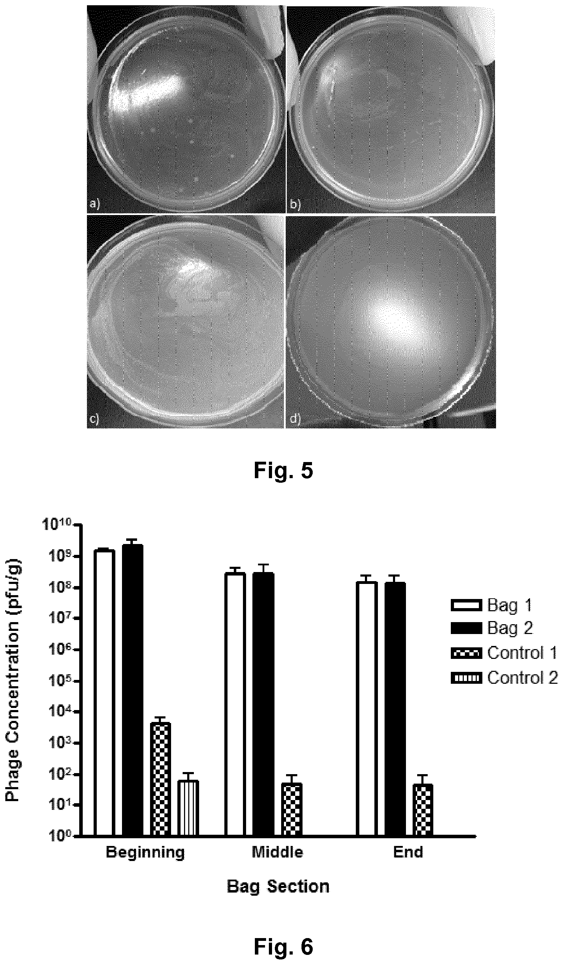

Migration to the farthest bag section ('end') was confirmed through the initial swab tests, with phage presence being used as an indicator (see Figure 5).

The bacteriophage count results show that φ49075 was at its highest level in the Beginning section. This section contained the immobilised sheet. The concentration of φ49075 dropped slightly (between 0.5-1 log) moving into the Middle section and remained at that level in the End section. The results are shown as a bar chart in Fig. 6 (see Bag 1 and Bag 2 in Fig. 6). Bags 1 and 2 were treated identically. Control 1 represents a salad bag treated with PBS only instead of Pba 49075 cells suspended in PBS. For Control 2, no liquid was added to the bag in addition to the immobilised material in the 'Beginning' section.

The concentrations in every bag section for the two controls were considerably lower than those of Bags 1 and 2 (see Controls 1 and 2 on Figure 6). This was due to the absence of its corresponding Pba host, without which φ49075 cannot grow. Despite Pba 49075 not being present, migration in Control 1 was still observed. In a similar pattern to Bags 1 and 2, phage content was highest in the Beginning section before dropping by almost 2 logs in the Middle and End sections. This migration can possibly be attributed to non-immobilised phage (adsorbed) getting knocked off/washing off the sheet and dispersing across the bag. No phage was detected in the Middle and End sections for Control 2. These results suggest that phage dispersion is greatly facilitated in the presence of a liquid medium, the absence of which results in undetectable levels of migration (Control 2). The presence of the corresponding host strain makes it possible for the phage to grow to a considerably higher level in all sections of the bag.

From these results we see that the presence of a fluid medium greatly increases the extent to which migration takes place. We note that moisture develops within salad bags as time passes by and this could help contribute to bacteriophage migration. The host strain was used in relatively large numbers and distributed across the whole salad bag for use in this experiment. In reality, much lower concentrations of undistributed bacteria will be encountered and this will affect bacteriophage migration.

### Example 3

### The Life of Bagged Salad

The aim of this study was to demonstrate the antimicrobial performance of bacteriophages against *Pectobacterium carotovorum* in fresh cut salad leaves, and the effect that reducing the bacterial load had on product shelf life. *P. carotovorum* is a plant pathogen with a diverse host range and is widely associated with breakdown of foods within the supply chain.

### Method

Six bags of 150g of Florette Sweet Crispy salad were purchased, six days prior to their official 'use by' date. The following groups were tested:
1. Control group. The leaves in the bag were sprayed with sterile water and heat sealed in the original bag.
2. Bacterial group. The leaves in the bag were inoculated with 200 cfu/g of *P. carotovorum.*
3. Bacteria + Phage immobilised onto packaging. The leaves in the bag were inoculated with 200 cfu/g of *P. carotovorum.* In addition, bacteriophages were immobilised onto the packaging, using the methods described in. International patent applications WO 03/093462 and WO2007072049.
The packaging material was the original Florette salad bag and was subject to immobilisation using 1 x 104 pfu/cm2 lysate. Each bag was heat sealed and "tossed" before storing at 4°C throughout the experiment.

The salad leaves were evaluated daily for physical traits and every 2 days for microbiological analysis (where possible). 1g samples were taken from the bags and bacteria were extracted. At all times, the visual assessment of the food product was based on a variety of key criteria specified by Kang, Kim and Choi (Kang, S. C., et al. (2007). "Shelf-life extension of fresh-cut iceberg lettuce (Lactuca sativa L) by different antimicrobial films." J Microbiol 8iotechnol vol. 17(8) pages 1284-1290). Scores for traits, ranging from 1 (very fresh) to 5 (very decayed), were recorded daily. The traits recorded were: browning, wilting, freshness, colour and gloss.

### Results - Observational Evaluation of Shelf Life

### Overall Freshness

In accordance with Kang and Kim (2007) there was an observational analysis of key product traits for all trial groups. Overall freshness, which is a key parameter defined by Kang and Kim, indicates the general physical changes of the samples with time. It was observed that all samples did decay over the duration of the trial: however, the rate of decay and extent differed between samples.

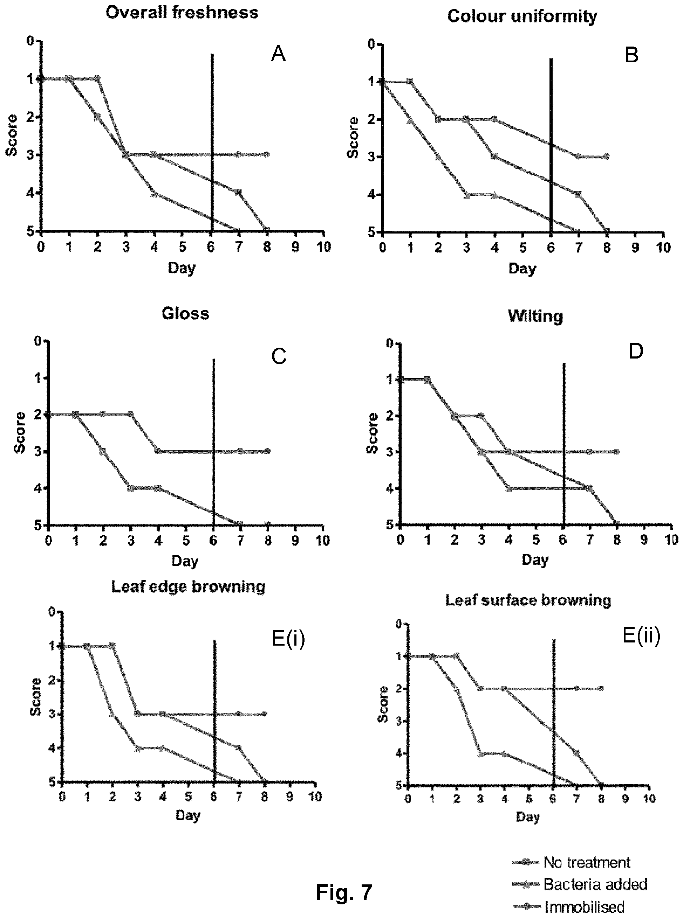

Results for the appearance of freshness are shown in Fig. 7A (1 = very fresh, 5 = very decayed; line indicates "use by date"). Fig. 7A shows that the group that only had bacteria added to the salad leaves displayed a fast rate of decay and also the most extensive decay. This was followed by the untreated control group, indicating bacteria were already present on the salad to cause this decay. However, it is the group with the immobilised bacteriophages on the packaging that demonstrated the least amount of decay, with no increase in observed decay after day 3 all the way through to day 8.

### Colour Uniformity

Colour uniformity is used to indicate the visual appeal of the salad to the consumer, and this also demonstrated a variation due to the presence of *P. carotovorum* and bacteriophages. Results are shown in Fig. 7B: the bacteria-only group lost its colour uniformity at a faster rate than the other sample groups. The control bag, without any additions of bacteria, lost uniformity of colour at a slower rate. The group with immobilised bacteriophages performed best with a significant difference to the other groups from day 4 to the end of the trial.

### Gloss

Similar to colour uniformity, gloss gives an indication of the visual appeal of salad. Results are shown in Fig. 7C: both the control salad leaves and the deliberately contaminated salad leaves performed similarly, with decreasing gloss over the 8 day trial. The leaves in the group containing immobilised bacteriophages, maintained a significantly higher gloss than the controls from day 1 onwards.

### Wilting

After browning, wilting is a strong indicator of salad appeal. Results are shown in Fig. 7D: wilting was rapid in all samples groups. Again, the bacteria only group displayed the most extensive rate of wilting, whilst the immobilised bacteriophage group showed a significant improvement beyond the "use by date".

### Browning

In relation to browning, two measures of were evaluated, they were: extent of browning around salad leaf edges and surface browning. Results are shown in Figs. 7E(i) and (ii): The rate of browning was very high in the sample with added *P*. *carotovorum* bacteria. This was expected as browning is the most common effect of this bacteria. Again, at the "shelf life point", the bag with immobilised bacteriophages had the least amount of browning.

### Conclusion regarding visual results

The observations made on the visual aspects of the salad show that the bag with immobilised bacteriophages on its surface performed consistently better than the other samples. However, even in the immobilised bag there is still some decay observed.

Thus these experiments demonstrate the effective reduction in bacterial load of *P. carotovorum* bacteria in bagged fresh cut salad by the presence of bacteriophages immobilised onto the inside of the salad bag. Not only do bacteriophages directly reduce bacterial numbers but they also prevent visible signs of decay of the salad leaves by reducing browning and wilting. There was no further deterioration of all 5 key parameters of the salad from day 6 (the original shelf life) to day 8. This shows that the immobilisation of bacteriophages onto the surface of a salad bag can have a significant improvement on the deterioration on the contents of the bag.

### Example 4

### Pathogenic Bacterial Reduction in Raw Chicken

This trial demonstrates the reduction in bacterial counts on raw chicken by using bacteriophages that are active against target bacteria strains. Both free bacteriophages and those immobilised onto food packaging were used.

### Experimental Design

Raw chicken was contaminated with the target bacteria and then wrapped in packaging. There were three experimental groups.
1. Control Group. Chicken contaminated with the target bacteria, and wrapped in standard food packaging.
2. Free Bacteriophage Group. Chicken contaminated with the target bacteria, with non-immobilised bacteriophage applied to the surface of the chicken and then wrapped in standard food packaging.
3. Immobilised Bacteriophage Group. Chicken contaminated with the target bacteria, and wrapped in food packaging which has been coated with immobilised bacteriophages that were attached using the Fixed Phage technology.

The above three groups were contaminated with; *Campylobacter jejuni, Salmonella,* and *Pseudomonas aeruginosa* and stored in the following storage conditions:
a. stored for 72 hours at 37°C
b. stored for 120 hours at 4°C
c. stored for 16 hours at room temperature

At the end of the prescribed storage conditions each group was sampled to determine the number of bacteria present on the samples.

### Methods

### Media

All media used in this Example is detailed in table 2. All media was purchased premade or made according to the methods known in the art.

**Table 2 Media used in Example 4.**

| **Medium** |
|---|
| **Brain Heart Infusion Agar** |
| **Brain Heart Infusion Broth** |
| **Soft Brain Heart Infusion Agar** |
| **X.L.D selective Salmonella agar** |
| **Karmali selective Campylobacter agar** |
| **PBS** |

### Bacteria and Bacteriophages

Bacteria and bacteriophages were acquired from Fixed-Phage stores. All bacteria and bacteriophages used in this study are detailed in Table 2. All bacteria were cultured according to standard methods known in the art

**Table 3 Bacteria and bacteriophages used in this study.**

| **Bacterium** | **Selective Agar** | **Lytic Bacteriophage** |
|---|---|---|
| ***C*. *jejuni*** | Karmali | φCAMPY |
| ***S. typhimurium*** | X.L.D | φSHIELD |
| ***P. aeruginosa*** | *Pseudomonas* agar | φLIN24 |

### Preparation and Inoculation of chicken broilers

Chicken broilers of thickness 50 mm were aseptically cut into 50 g slices using a sterile razor blade. Broilers were inoculated with a 2 mL solution containing a concentration of 1×10⁶ CFU/mL of appropriate bacteria in a PBS solution. The bacteria tested were *C*. *jejuni* alone, *S*. *typhimurium* alone, *P. aeruginosa* alone and a co-culture comprising *C*. *jejuni* and *S*. *typhimurium.* Slices used for negative controls were inoculated with 2 mL of sterile PBS. Each broiler was then incubated at RT for 30 min.

### Preparation of packaging material

Polyamide/ Polyethylene (PA/PE) composite vacuum wrap (Andrew James Worldwide) of thickness 0.2mm was cut into 15 × 28 cm bags. All bags to be treated with corona discharge were aseptically cut to allow treatment of the inner surface.

### Immobilisation of bacteriophages onto packaging material

Each packaging surface was treated with corona discharge. A bacteriophage solution of concentration of 1×10⁷ PFU/mL was prepared for immobilisation. Each packaging surface was treated by 2× corona discharge treatments at 7.5kV as disclosed in WO 03/093462 and WO2007072049 and a 10 mL bacteriophage solution was aseptically applied to the surface. Each surface was then subjected to 3× washes with sterile PBS and dried under a laminar flow cabinet for 30 min. A small sample of the packaging material was retained for antimicrobial testing using the agar overlay method that is standard in the art.

### Treatment of chicken surface with bacteriophage

A sample of bacteriophage of concentration 0.5×10⁸ PFU/mL was prepared for the treatment of each chicken piece. Each chicken piece was inoculated with 2mL of bacteriophage solution and incubated at room temperature for 30 min.

### Storage of chicken samples

A single chicken piece was placed in each appropriate bag and each bag was vacuum sealed under aerobic conditions using a vacuum sealer (Andrew James). A total of 3 pieces were exposed to immobilised bacteriophage and 3 pieces were exposed to non-immobilised bacteriophage. For controls, 1 non inoculated piece was exposed to immobilised bacteriophage, 1 non inoculated piece was exposed to non - immobilised bacteriophage, 1 non inoculated piece was wrapped in food packaging with no treatment and 3 pieces inoculated with bacteria were wrapped in food packaging with no treatment. Chicken pieces were stored at 37°C for 72h for the accelerated tests, 4°C for 120h for the refrigerated tests and at room temperature for 16h for the room temperature test.

### Sampling of chicken broilers

Each chicken piece was aseptically cut into 3 separate 10g pieces and each piece was added to 15 mL of sterile PBS. Each tube was then added to a rotary mixer at 400 RPM for 30mins at room temperature. Each sample was then given 7× 1/10 serial dilutions in sterile PBS and 3x10 µl samples of each dilution were added to the appropriate selective agar. A 20 µl sample was added to Karmali agar plates. The X.L.D and *Pseudomonas* agar plates were incubated for 72h aerobically at 37 °C and Karmali agar plates were incubated for 72h anaerobically at 37°C.

### Sampling of packaging material

Samples of packaging material containing immobilised bacteriophage, non-immobilised bacteriophage and untreated control were sampled for antimicrobial activity. A total of 3× samples were added to an agar overlay and incubated under aerobic conditions at 37°C. Antimicrobial activity was confirmed by the presence of zones of inhibition around the material.

### Data entry and Statistical analysis

The data for bacteria isolated from each chicken broiler was plotted to determine frequency distribution and compared using a Kruskal-Wallis test with a 95% confidence interval. All statistical analysis was undertaken using GraphPad Prism 4 software.

### Results

### Isolation of Campylobacter jejuni from treated chicken broilers

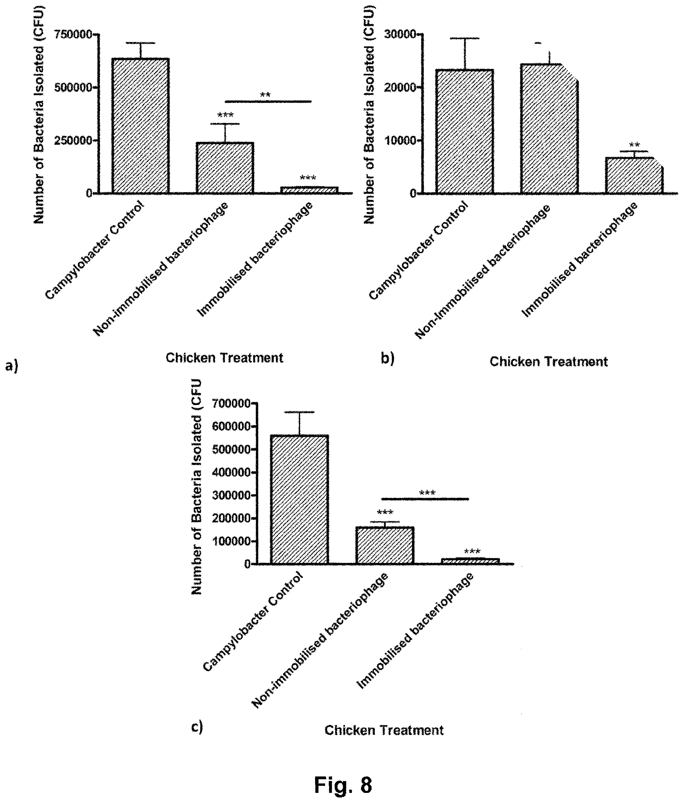

The number of *Campylobacter jejuni* isolated from chicken pieces following contamination and storage under the conditions above are shown in Fig. 8. No antimicrobial activity was noted on untreated material. No *C*. *jejuni* bacteria were isolated from the negative control chicken pieces from any tests.

In the accelerated test, significantly (p<0.001) less *C*. *jejuni* were recovered from chicken pieces treated with immobilised bacteriophages (median 6×10³ CFU, range 0 - 1.3×10⁵ CFU) and non-immobilised (median 1.2×10⁵ CFU, range 3×10³ - 5.1×10⁵ CFU) than the positive controls (median 3.3×10⁵ CFU, range 3×10⁴ - 3.3×10⁶ CFU) (Fig. 8a). Significantly (p<0.01) less bacteria were isolated from chicken pieces treated with immobilised bacteriophage than chicken pieces treated with non-immobilised bacteriophage (Fig. 8a).

For the room temperature test, significantly (P<0.01) less *C*. *jejuni* were recovered from chicken pieces treated with immobilised bacteriophages (median 5×10³ CFU, range 500 - 2×10⁴ CFU) than the positive controls (median 1×10⁴ CFU, range 500 - 1.1×10⁵ CFU). No significant difference was observed between the positive control and chicken pieces treated with non-immobilised bacteriophages (median 1.1×10⁴ CFU, range 5×10³ - 6×10⁴ CFU) (Fig. 8b). Significantly (p<0.01) less bacteria were isolated from chicken pieces treated with immobilised bacteriophage than chicken pieces treated with non-immobilised bacteriophage (Fig. 8b).

In the refrigerated test, significantly (p<0.001) less *C*. *jejuni* were recovered from chicken pieces treated with non-immobilised (median 1.4×10⁵ CFU, range 500 - 1.8×10⁶ CFU) and immobilised bacteriophages (median 3.5×10⁵ CFU, range 5×10³-6.5×10⁴ CFU) than the positive controls (median 1×10⁶ CFU, range 1.1⁶-2×10⁶ CFU) (Fig. 8c). Significantly (p<0.001) less bacteria were isolated from chicken pieces treated with immobilised bacteriophage than chicken pieces treated with non-immobilised bacteriophage (Fig. 8c).

### Isolation of Salmonella typhimurium from treated chicken broilers.

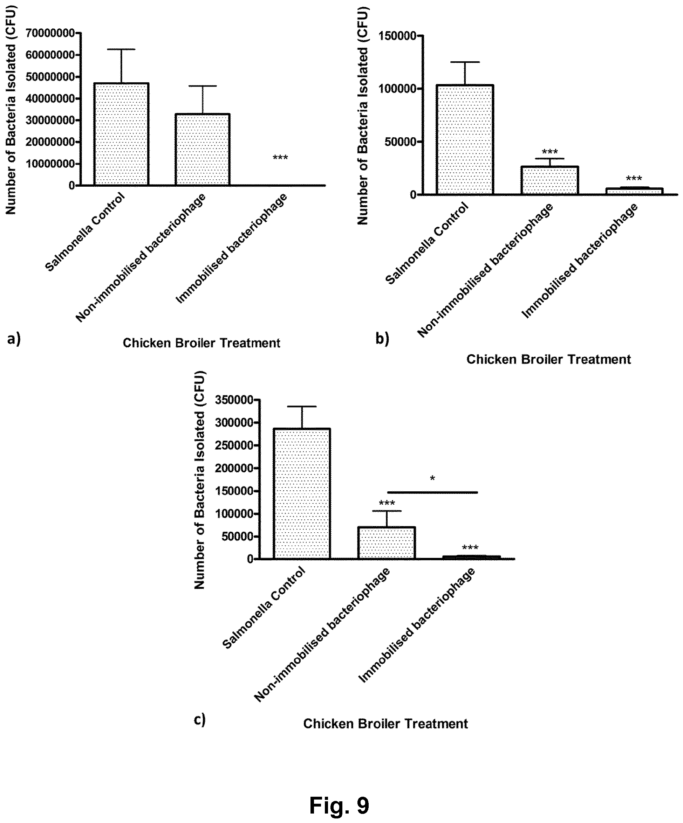

The number of *Salmonella typhimurium* isolated from chicken pieces following contamination and storage under the conditions above are shown in Fig. 9. No antimicrobial activity was noted on untreated material. No *S*. *typhimurium* bacteria were isolated from the negative control pieces from any tests.

In the accelerated test, significantly (p<0.001) less *S*. *typhimurium* were recovered from chicken pieces treated with immobilised bacteriophages (median 3×10³ CFU, range 500 - 4×10⁴ CFU) than the positive controls (median 2×10⁷ CFU, range 1 ×10⁶ - 3×10⁸ CFU). No significant difference was observed between the positive control and chicken pieces treated with non-immobilised bacteriophages (median 1×10⁷ CFU, range 1×10⁶- 3×10⁸ CFU) (Fig. 9a). Significantly (p<0.001) less bacteria were isolated from chicken pieces treated with immobilised bacteriophage than chicken pieces treated with non-immobilised bacteriophage (Fig. 9a).

For the room temperature test, significantly (p<0.001) less *S*. *typhimurium* were recovered from chicken pieces treated with immobilised bacteriophages (median 2.8×10³ CFU, range 400 - 2.8×10⁴ CFU) and non-immobilised bacteriophages (median 5×10³ CFU, range 1×10³ - 1.2×10⁵ CFU) than the positive controls (median 6×10⁴ CFU, range 1×10⁴- 4×10⁵CFU)(Fig. 9b). No significant difference was noted between bacteria isolated from chicken pieces treated with immobilised bacteriophage than chicken pieces treated with non-immobilised bacteriophage (Fig. 9b).

For the refrigerated test, significantly (p<0.001) less *S*. *typhimurium* were recovered from chicken pieces treated with immobilised bacteriophages( median 1×10³ CFU, range 0- 2.3×10⁴ CFU) and non-immobilised bacteriophages (median 1×10⁴ CFU, range 200 - 8×10⁵ CFU) than the positive controls (median 2.2×10⁵ CFU, range 500 - 9×10⁵ CFU) (Fig. 9c). Significantly (p<0.05) less bacteria were isolated from chicken pieces treated with immobilised bacteriophage than chicken pieces treated with non-immobilised bacteriophage.

### Isolation of Pseudomonas aeruginosa from treated chicken broilers.

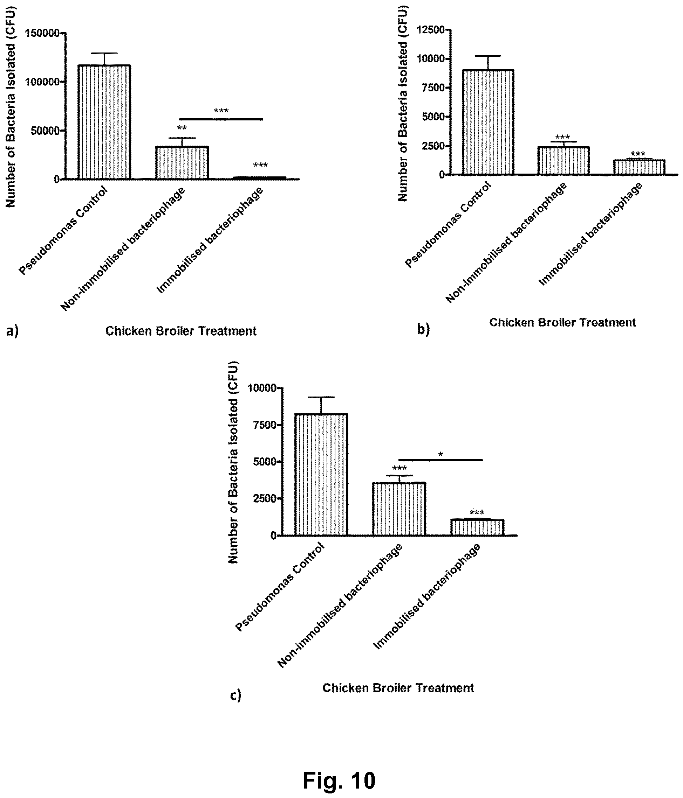

The number of *Pseudomonas aeruginosa* isolated from chicken pieces following contamination and storage under the conditions above are shown in Fig. 10. No antimicrobial activity was noted on untreated material. No *P. aeruginosa* bacteria were isolated from the negative control pieces from any tests.

In the accelerated test, significantly (p<0.001) less *P. aeruginosa* were recovered from chicken pieces treated with immobilised bacteriophages (median 2×10³ CFU, range 500 - 5×10³ CFU) and significantly (p<0.01) less *P. aeruginosa* non-immobilised bacteriophage (median 1.5×10⁴ CFU, range 5×10³- 2×10⁵ CFU) than the positive controls (median 1×10⁵ CFU, range 5×10⁴-3×10⁵ CFU) (Fig. 10a). Significantly less bacteria were isolated from chicken pieces treated with immobilised bacteriophage than chicken pieces treated with non-immobilised bacteriophage (Fig. 10a).

For the room temperature test, significantly (p<0.001) less *P. aeruginosa* were recovered from chicken pieces treated with immobilised bacteriophages (median 1050 CFU, range 500 - 4×10³ CFU) and non -immobilised bacteriophages (median 1×10³ CFU, range 500 - 1×10⁴ CFU) than the positive controls (median 5.5×10³ CFU, range 5×10³ - 3×10⁴ CFU)(Fig. 10b). No significant difference was noted between bacteria isolated from chicken pieces treated with immobilised bacteriophage than chicken pieces treated with non-immobilised bacteriophage (Fig. 10b).
For the refrigerated test, significantly (p<0.001) less *P. aeruginosa* were recovered from chicken pieces treated with immobilised bacteriophages (median 1×10³ CFU, range 500 - 2×10³ CFU) and non- immobilised bacteriophages (median 5×10³ CFU, range 500 - 1×10⁴ CFU) than the positive controls (median 5×10³ CFU, range 5×10³ - 2.5×10⁴ CFU) (Fig. 10c). Significantly (p<0.05) less bacteria were isolated from chicken pieces treated with immobilised bacteriophage than chicken pieces treated with non-immobilised bacteriophage.

### Isolation of co-cultured C. jejuni and S. typhimurium bacteria from treated chicken broilers

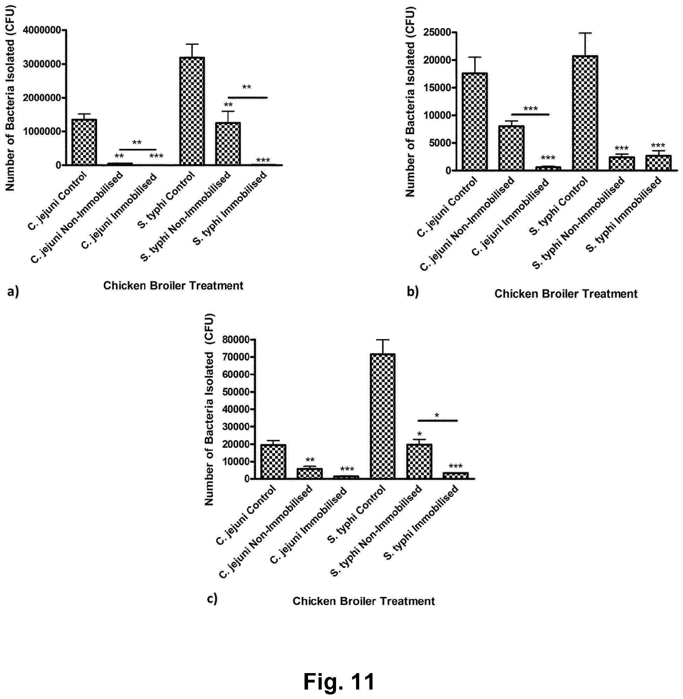

The test for single bacteria types was repeated with a combination of bacteria: namely C. *jejuni and S. typhimurium.* The number of each type of bacteria isolated from chicken pieces following contamination and storage under the conditions above are shown in Fig. 11.

No *C*. *jejuni* or *S*. *typhimurium* bacteria were isolated from the negative control pieces from any tests. In the accelerated test, significantly less *C*. *jejuni* were recovered from chicken pieces treated with immobilised bacteriophages (median 2.5×10³ CFU, range 500 - 1×10⁴ CFU) and non-immobilised bacteriophage (median 5×10⁴ CFU, range 5×10³ - 1.5×10⁵ CFU) than the positive controls (median 1×10⁶ CFU, range 5×10⁵ - 3×10⁶ CFU) (Fig.11a). Significantly (p<0.001) less *S*. *typhimurium* were also recovered from chicken pieces treated with immobilised bacteriophage (median 1×10⁴ CFU, range 1×10³ - 8×10⁴ CFU) and with non-immobilised bacteriophage (median 2.2×10⁵, range 1.9×10³ - 5×10⁶ CFU) than the positive control (median 3×10⁶, range 1×10⁶ - 8×10⁶ CFU) (Fig. 11 a). Significantly (p<0.01) less *C*. *jejuni* and *S*. *typhimurium* were isolated from chicken pieces treated with immobilised bacteriophage than chicken pieces treated with non- immobilised bacteriophage.

For the room temperature test, significantly less *C*. *jejuni* were recovered from chicken pieces treated with immobilised bacteriophages (median 300 CFU, range 50 - 4×10³ CFU) and non-immobilised bacteriophage (median 5×10³ CFU, range 500-2×10⁴ CFU) than the positive controls (median 1.5×10⁴ CFU, range 1.5×10³ - 6×10⁴ CFU) (Fig. 11 a). Significantly less *S*. *typhimurium* were also recovered from chicken pieces treated with immobilised bacteriophage (median 800 CFU, range 100 - 2×10⁴ CFU) and with non-immobilised bacteriophage (median 1×10³, range 100 - 1×10⁴ CFU) than the positive control (median 1×10⁴, range 1×10³ - 8×10⁴ CFU) (Fig. 11 a). No significant difference was observed between *C*. *jejuni* isolated from both chicken treatments and significantly (p<0.05) less *S*. *typhimurium* was isolated from chicken pieces treated with immobilised bacteriophage than chicken pieces treated with non-immobilised bacteriophage (Fig. 11 a).

For the refrigerated test, significantly less *C*. *jejuni* were recovered from chicken pieces treated with immobilised bacteriophages (median 1×10³ CFU, range 450 - 4.5×10³ CFU) and non-immobilised bacteriophage (median 2.5×10³ CFU, range 1×10³- 2.5×10⁴ CFU) than the positive controls (median 1.5×10⁴ CFU, range 5×10³ - 5×10⁴ CFU) (Fig. 11a). Significantly less *S*. *typhimurium* were also recovered from chicken pieces treated with immobilised bacteriophage (median 3×10³ CFU, range 2×10³ - 8×10³ CFU) and with non-immobilised bacteriophage (median 1×10⁴, range 1 ×10³ - 5×10⁴ CFU) than the positive control (median 6×10⁴, range 1 ×10⁴- 1.6×10⁵ CFU) (Fig. 11c). No significant difference was observed between *C*. *jejuni* isolated from both chicken treatments and significantly (p<0.05) less *S*. *typhimurium* was isolated from chicken pieces treated with immobilised bacteriophage than chicken pieces treated with non-immobilised bacteriophage (Fig. 11c).

### Conclusions

Thus, it is demonstrated that bacteriophages immobilised on food packaging can significantly reduce pathogenic strains of bacteria from raw chicken pieces. In some cases, there was a 5 log reduction in bacterial count. Free bacteriophages showed a lower reduction in bacterial counts than bacteriophages immobilised onto packaging.

### Example 5

### Migration of Bacteriophages Across Chicken

A key factor in determining the effectiveness of immobilisation of bacteriophage onto food packaging is in treating food that is remote from the packaging surface. To investigate this, experiments were carried out to determine the extent of migration of bacteriophage across chicken skin from an initial point.

### Experimental Methods

The experimental model used chicken skin. For this model, there were two experimental groups used:
1. Chicken skin to which only bacteriophages were added.
2. Chicken skin to which both bacteria (*Campylobacter jejuni*) and bacteriophages were added.

In the group containing bacteria, a 30µl sample of *C*. *jejuni* (1 × 10⁷ cfu/mL) was evenly spread over the chicken skin 6 × 5 cm². This resulted in an even distribution of 3 × 105 cfu/cm² of skin. In both groups, 10µl of bacteriophage lysate (1 × 10⁸ pfu/mL) was added at a point on the chicken skins. The skins were then covered with a polyethylene film and incubated at 4°C. Samples were taken from the chicken skin after 16 hours at various points along the chicken skin which were; 0.5, 1, 1.5 and 2 cm from the point of the original bacteriophage inoculation. These samples were assayed for bacteriophages.

### Results

In both groups, i.e. with bacteria and without, bacteriophages were isolated from the chicken skin. In the group that did not have any bacteria, some bacteriophages were isolated from the skin up to a distance of 1 cm from the point of original inoculation.

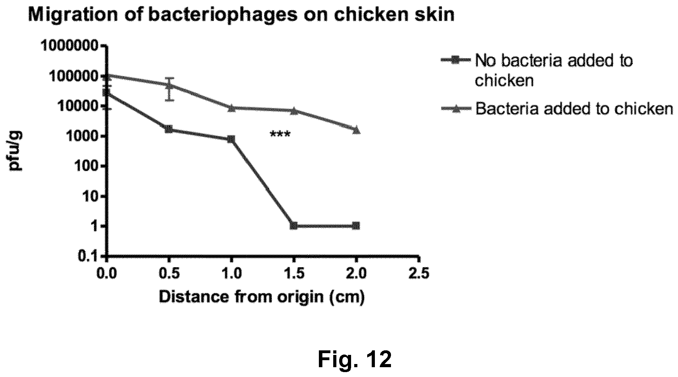

In the group for which *C*. *jejuni* bacteria was added there was a high rate of migration, with significant levels of bacteriophage found at distances greater than 2 cm from the point of original inoculation. These results are presented in Fig. 12. (This graph has a logarithmic scale and therefore, 1 pfu = 0 pfu).

### Conclusions

This study illustrates the extent that bacteriophages can migrate over raw chicken skin from a fixed point. It also shows that the distance they are able to migrate can be several centimetres in just a few hours. This migration may stem from a number of reasons. First, as each bacterial cell is infected it may migrate some distance before bursting and releasing new bacteriophages to go on and infect further bacterial hosts. Secondly, each bacteriophage may be capable of clearing (and therefore moving through) an area with a radius of 0.1cm of bacteria. Both of these factors allows bacteriophages to spread relatively long distances over chicken skin from an initial point.

### Experimental Methods

### Preparation of Growth Media

All laboratory microbiological and bacteriophage media used herein were acquired from Oxoid. Phosphate buffered saline (PBS) was acquired from Fisher Scientific and used as a diluent. All microbiological media were prepared according to manufacturer's instructions using distilled water. Prepared media was sterilised using steam sterilisation at 121°C for 15 minutes, before use. If not used immediately, microbiological media was stored at room temperature for a maximum of 2 weeks. Before use, solid agar was melted by microwave for 5 minutes at 800W. Agar plates were aseptically poured in a microbiological fume hood to maintain sterility, with 20mL of molten agar per plate and air dried for 30 minutes. Liquid media was prepared by using aseptic technique to aliquot into sterile tubes.

### Validation of Test Bacteria and Bacteriophage

Growth of the bacteria on the appropriate microbiological media indicated viable stocks. Solutions of bacteriophages with a titre of 1×10⁸ plaque forming units (PFU)/mL, were used as a starter titre. To determine the concentration of bacteriophage in solution, the solution was subjected to 8 × 1/10 serial dilutions in sterile PBS. A sample of each dilution was tested using the agar overlay method. A clear plaque in the growth media indicated viable bacteriophage and the bacteriophage concentration was determined by counting the number of plaques in the lowest dilution.

The invention thus provides packaging materials for preservation of objects including foodstuffs, uses for the packaging material and methods and systems for production of these packaging materials.

## Claims

1. An envelope of material defining a lumen wherein the lumen contains bacteriophage covalently attached to a surface.

2. A product according to claim 1, wherein the surface is the interior of the envelope.

3. A product according to claim 1, wherein the surface is within the lumen but separable or separated from the envelope.

4. A product according to any preceding claim, wherein the envelope is sealed.

5. A product according to any preceding claim, wherein the product is for containing biological material.

6. A product according to claim 5, wherein the biological material is plant material.

7. A product according to any of claims 1-4, wherein the product is for containing food.

8. A product according to claim 7, wherein the food is salad.

9. A product according to any of claims 1-6, wherein the plant material is not edible.

10. A product according to any preceding claim, wherein the bacteriophage are active against bacteria selected from one or more of *Campylobacter, Salmonella, Pseudomonas, Pectobacterium* and *Citrobacter.*

11. A product according to claim 10, wherein the bacteriophage are active against bacteria of the genus *Citrobacter.*

12. A method of manufacturing the product of any of claims 1-11, comprising covalently attaching bacteriophage to the surface and forming the lumen from the material, enclosing the surface.

13. A method of packaging biological material, wherein the method comprises sealing biological material in the lumen of the product of any of claims 1-11.

14. Use of the product of claims 1-11 to control the number of bacteria on material sealed within the lumen of the product.

15. Use of bacteriophage active against bacteria of the genus *Citrobacter* in the control or prevention of spoiling of salad.
